# EUROPÄISCHE PATENTSCHRIFT

(11) **EP 1 123 458 B1**
(45) Veröffentlichungstag und Bekanntmachung des Hinweises auf die Patenterteilung: **24.04.2002**
(21) Anmeldenummer: 99953818.4
(22) Anmeldetag: 14.10.1999
(51) Int. Cl.: F02D 9/10

(54) **KLAPPENMECHANISMUS**
FLAP MECHANISM
MECANISME A CLAPET

(30) Priorität: 21.10.1998 DE 19848440
(43) Veröffentlichungstag der Anmeldung: 16.08.2001
(73) Patentinhaber: FILTERWERK MANN & HUMMEL GmbH, 71631 Ludwigsburg (DE)
(72) Erfinder: JESSBERGER, Thomas, D-71277 Rutesheim (DE); MAIER, Stefan, D-74354 Besigheim (DE); VACULIK, Robert, D-71672 Marbach (DE)
(74) Vertreter: Voth, Gerhard, Dipl.-Ing.
(86) Internationale Anmeldenummer: EP9907724
(87) Internationale Veröffentlichungsnummer: WO0023701

(56) Entgegenhaltungen:
- EP-A- 0 482 272
- EP-A- 0 747 587
- DE-A- 4 329 526
- DE-A- 4 423 370
- DE-A- 19 516 927
- DE-A- 19 528 266
- DE-A- 19 615 438
- DE-A- 19 707 828
- DE-C- 19 717 347
- FR-A- 2 119 705
- US-A- 3 643 583

## Beschreibung

Die Erfindung betrifft einen Klappenmechanismus, insbesondere eine montagegespritzte Schaltklappe, nach der Gattung des Patentanspruches 1, (siehe z.B. EP-A-0 747 587).

Montagegespritzte Schaltklappen sind z. B. aus der EP 482 272 bekannt. Die Klappen werden mitsamt ihrem Rahmen in zwei Schritten in einem Gußwerkzeug gefertigt. Im ersten Schritt wird der Rahmen eingespritzt, wobei die aus verschiedenen Richtungen eingeschobenen Kerne das für die Schaltklappe vorgesehene Volumen einnehmen. Diese werden für den zweiten Prozeßschritt teilweise entfernt, so daß die Schaltklappe in das nun freie Volumen eingespritzt werden kann. Dabei ergeben sich die Wandungen der Gußform für die Schaltklappe teilweise aus den Kernen und teilweise aus den Wandungen des Klappenrahmens. Die Kunststoffkomponenten für die Klappe sind jedoch so gewählt, daß sie sich nicht mit dem Kunststoff des Klappenrahmens verbinden.

Nach der Abkühlung fällt die Klappe aus dem Spritzgießwerkzeug und kann ohne eine Nachbearbeitung ihrer Verwendung zugeführt werden. Durch die Schwindung der eingespritzten Klappe während der Abkühlung ergibt sich jedoch zwischen Klappe und Klappenrahmen wie auch zwischen Klappenwelle und Klappenrahmen ein Spiel. Hierdurch wird letztendlich auch die Drehbarkeit der Klappe gewährleistet.

Die Größe des Lagerspiels zwischen Klappenwelle und Klappenrahmen läßt sich aufgrund des Fertigungsprozesses der montagegespritzten Klappe nicht frei wählen. Im übrigen hängt das Lagerspiel im Betrieb der Schaltklappe auch von der in der Umgebung herrschenden Temperatur sowie Luftfeuchtigkeit ab.

Insbesondere bei niedrigen Temperaturen schrumpft die Schaltklappe im Klappenrahmen wodurch das Lagerspiel sich vergrößert. Dieser Effekt ist unerwünscht. Bei zu großem Lagerspiel kann die Klappe durch eine Schwingungsanregung (z. B. durch eine Brennkraftmaschine) zerstört werden. Außerdem ist unter der Voraussetzung einer Dichtheitsanforderung zur Umgebung hin eine zusätzliche Abdichtung zwischen Klappenrahmen und Klappenwelle an den Lagerstellen notwendig.

Eine zu große Schwindung der Klappenflügel im Querschnitt des Klappenrahmens ist unerwünscht. Hierdurch ergibt sich ein Spalt, wodurch die Klappe den Querschnitt des Klappenrahmens nicht mehr vollständig verschließen kann.

Die Problematik der Schrumpfung der Klappenachsen bei unterschiedlichen Betriebsbedingungen kann im übrigen auch bei zusammengebauten Schaltklappen problematisch sein. Dies ist regelmäßig dann der Fall, wenn die Schaltklappe bei tieferen Temperaturen stärker schrumpft als der Klappenrahmen.

Die Aufgabe der Erfindung besteht daher darin, einen Klappenmechanismus zu schaffen, der unabhängig vom Betriebszustand und Fertigungsverfahren des Klappenmechanismus eine optimale Dichtheit gegenüber der Umgebung bzw. des zu verschließenden Querschnittes aufweist, wobei ein Lagerspiel zwischen Klappenachse und Klappenrahmen in allen Betriebszuständen minimiert oder sogar verhindert werden soll.

Diese Aufgabe wird durch die Merkmale des Patentanspruchs 1 gelöst.

### Vorteile der Erfindung

Der erfindungsgemäße Klappenmechanismus ist derart gestaltet, daß die Schwindung der Klappe, die aufgrund des Fertigungsprozesses oder wegen Temperatur- bzw. Feuchtigkeitsschwankungen auftritt, ausgeglichen werden kann. Dies ist insbesondere durch konstruktive Maßnahmen am Rand der Klappenflügel bzw. an der Klappenwelle gewährleistet. Auf diese Weise kann zum einen das Klappenspiel in der Wellenlagerung im Rahmen verhindert werden, zum anderen werden die Dichtheitsanforderungen an die verschlossene Klappe bzw. an die Wellenlagerung erfüllt.

Zur Verminderung des durch die Schrumpfung der Klappe bedingten Spaltes s, kann an die montagegespritzte Klappe nach ihrer Abkühlung eine zweite Komponente angespritzt werden, die den Spalt s ausfüllt. Diese Komponente wird natürlich auch schrumpfen. Jedoch wird der sich ergebene Spalt sehr viel geringer ausfallen, da die erkalteten Klappenflügel nach dem Einspritzen der zweiten Komponente ihr Volumen nicht mehr verändern. Der ursprüngliche Spalt s, der sich nach Einspritzen der ersten Komponente in den Klappenrahmen ergibt, kann so um den Faktor b/s verringert werden, wobei b die halbe Klappenbreite von der Drehachse zum Klappenflügelrand darstellt.

Ein vollständig in Montagespritztechnik hergestelltes Klappenmodul kann somit in drei Schritten erzeugt werden. Im ersten Schritt wird der Rahmen gespritzt, im zweiten der Klappenkörper bestehend aus Klappenflügel und Klappenwelle und im dritten Schritt wird der Klappenrand gespritzt. Für die Herstellung des Klappenrandes müssen entsprechende Zuführungen im Spritzgießwerkzeug vorgesehen werden, während zur Herstellung der Schaltklappe selbst die Bohrungen im Klappenrahmen zur Aufnahme der Klappenwelle genutzt werden können.

Der montagegespritzte Klappenmechanismus wird bevorzugt aus Kunststoff hergestellt. Voraussetzung bei der Werkstoffwahl für die einzelnen Komponenten ist, daß die Komponente für den Klappenrand an den Klappenfiügeln haftet jedoch nicht am Klappenrahmen. Dies ist insbesondere dann der Fall, wenn der Klappenrand aus demselben Kunststoff gespritzt wird, wie die Klappenflügel, denn auch die Klappenflügel dürfen nicht am Klappenrahmen haften bleiben.

Es ist jedoch auch vorteilhaft, für den Klappenrand ein elastisches Material, wie z. B. TPE, vorzusehen. Der elastische Rand der Klappenflügel gewährleistet dann eine bessere Dichtung der Klappe gegenüber dem Klappenrand, insbesondere, wenn im Inneren des Klappenrandes ein entsprechender Absatz vorgesehen wird, an dem sich die Schaltklappe abstützt.

Gemäß einer anderen Ausgestaltung der Erfindung kann die Klappenwelle im Bereich der Lagerung im Klappenrahmen zumindest teilweise konisch ausgeführt sein. Ein entsprechender Konus, der mit der Klappenwelle korrespondiert, muß dann auch in der Aufnahmebohrung im Klappenrahmen vorgesehen sein. Der Konus kann seine Öffnung zum Äußeren des Klappenrahmens hin oder zum Inneren des Klappenrahmens hin aufweisen. Welche Öffnungsrichtung im Einzelfall sinnvoller ist hängt von der Wahl der Werkstoffe ab, wie im folgenden genauer erläutert wird.

Im Normalfall wird die Klappe bei einer Verringerung der Temperatur bzw. Luftfeuchtigkeit stärker schwinden als der Klappenrahmen. Dies ist der Anwendungsfall in dem der Konus in Klappenwelle und Klappenrahmen sinnvollerweise mit einer Öffnungsrichtung nach außen versehen wird. Die Schrumpfung der Klappenwelle weist eine axiale und eine radiale Komponente auf. Die radiale Schrumpfungskomponente vergrößert bzw. erzeugt einen Spalt zwischen der konischen Aufnahme im Klappenrahmen und der Klappenwelle. Gleichzeitig führt jedoch die axiale Schrumpfung der Klappenwelle zu einer Verkürzung der Achse und dadurch zu einer Kompensation des entstandenen Spaltes. Hierzu ist es notwendig, daß die Klappenwelle axial festgelegt ist. Dies kann sinnvollerweise durch Vorsehen eines zweiten konischen Bereiches am anderen Ende der Klappenwelle erfolgen. Die axiale Festlegung kann aber auch durch einen Absatz auf der Welle gewährleistet werden. Eine axiale Festlegung der Klappenwelle ist natürlich auch durch die Klappenflügel gegeben. Diese begrenzen das Axialspiel der Klappenwelle in der Öffnung des Klappenrahmens.

Der Öffnungswinkel des Konus kann in Abhängigkeit der verwendeten Werkstoffe und den Abmessungen der Schaltklappe derart gewählt werden, daß sich die axiale und radiale Schrumpfungskomponente der Klappenwelle ausgleichen. Alternativ hierzu läßt sich der Öffnungswinkel jedoch auch so wählen, daß bei abnehmender Temperatur eine leichte axiale Verspannung der Klappenwelle erfolgt. Auf diese Weise lassen sich Toleranzen in Klappenwelle und Klappenrahmen ausgleichen, wobei über den Toleranzbereich eine spielfreie Lagerung der Klappenwelle im Klappenrahmen gewährleistet ist. Das Untermaß der Klappenwelle im Tieftemperaturbereich sorgt dann gleichzeitig für einen Verschleißausgleich.

Es ist vorteilhaft den konischen Bereich der Klappenwelle nicht über den gesamtem Lagerbereich im Klappenrahmen vorzusehen, so daß sich neben dem konischen Bereich auch ein zylindrischer Bereich der Klappenwelle ergibt. Durch diese Maßnahme lassen sich die Vorteile der erfindungsgemäßen Klappe mit den Vorteilen bekannter Lösung kombinieren. Bei hohen Temperaturen ergibt sich im konischen Bereich nämlich ein Spiel, da sich die Klappenwelle axial stärker dehnt als radial. Gleichzeitig nimmt aber der Durchmesser der Klappenwelle im zylindrischen Bereich stärker zu als sich die Bohrung im Klappenrahmen zur Aufnahme der Klappenwelle erweitert. Die Aufgabe der spielfreien Lagerung wird also bei hohen Temperaturen von dem zylindrischen Bereich der Klappenwelle übernommen. Durch entsprechende Gestaltung des Konus läßt sich erreichen, daß die Lagerung der Welle bei einer bestimmten Temperatur vom zylindrischen in den konischen Bereich übergeht, so daß eine spielfreie Lagerung unter allen Betriebsbedingungen der Klappe gegeben ist. Für den Einflußparameter der Luftfeuchtigkeit gelten im wesentlichen dieselben Aussagen wie für die Temperatur.

Gemäß einer besonderen Ausführungsform kann der zylindrische Bereich auch stufenlos in den konischen Bereich übergehen. Es ergibt sich dabei eine trichterförmige Gestalt der Durchgangslöcher im Rahmen, so daß zwischen zylindrischem und konischem Bereich keine Kante entsteht. Die Gestaltung des Trichters kann derart erfolgen, daß die Klappenwelle aufgrund ihrer Ausdehnung immer nur in einem kleinen Bereich in der Bohrung des Klappenrahmens zur Berührung kommt. Bei steigender Temperatur wandert diese Berührungsfläche dann vom konischen Bereich in den zylindrischen Bereich. Vorteilhaft an dieser Ausbildung ist eine minimale Reibung über den gesamten Betriebsbereich der Klappe.

Eine besondere Ausführungsform der Erfindung sieht vor, in zumindest einer Lagerstelle der Klappenwelle im Klappenrahmen zwei konische Bereiche mit entgegengesetzten Neigungswinkeln anzubringen. Dabei kann zwischen diesen beiden konischen Bereichen ein zylindrischer Bereich der Klappenwelle liegen. Die Wirkungsweise dieser Lagerungsvariante entspricht den oben beschriebenen. Denkbar ist diese Variante z. B. bei einer fliegenden Lagerung der Schaltklappe im Klappenrahmen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in den Zeichnungen anhand von schematischen Ausführungsbeispielen beschrieben.
Hierbei zeigen
- Figur 1: ein montagegespritztes Klappenmodul als Aufsicht, wobei die Klappe einen Klappenrand als zweite Komponente sowie konische Bereiche der Klappenwelle in beiden Lagerstellen im Klappenrahmen aufweist,
- Figur 2: den Schnitt A-A durch das montagegespritzte Klappenmodul gemäß Figur 1,
- Figur 3: die Ausführung einer Klappenlagerung im Klappenrahmen mit stufenlosem Übergang vom zylindrischen in den konischen Bereich entsprechend dem Detail X in Figur 1 und
- Figur 4: eine Wellenlagerung der Klappe im Klappenrahmen mit zwei konischen Bereichen entsprechend dem Detail x in Figur 1.

### Beschreibung der Ausführungsbeispiele

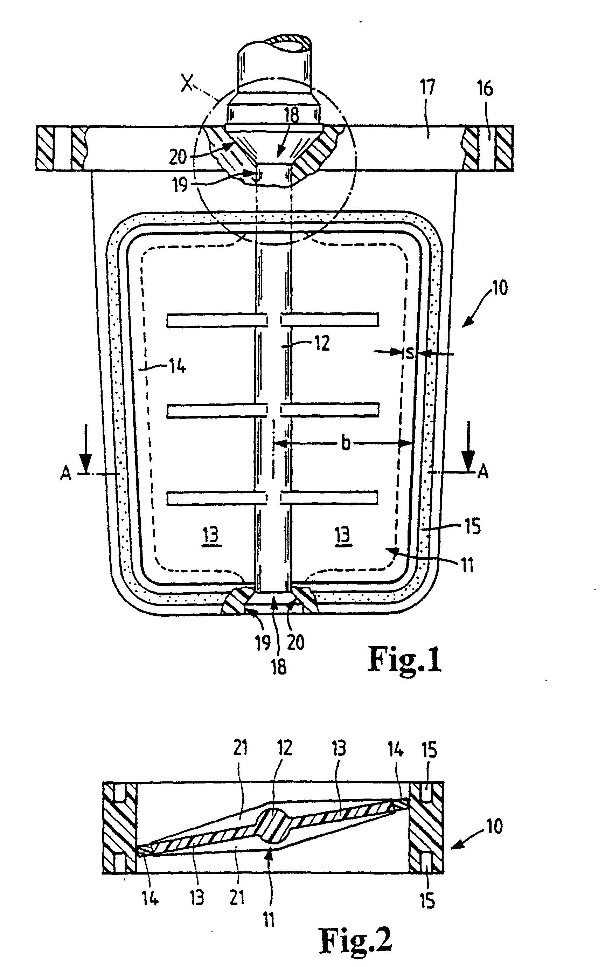

In Figur 1 ist der erfindungsgemäße Klappenmechanismus als Aufsicht dargestellt. Dieser besteht aus einem Klappenrahmen 10 in denen eine Klappe 11 durch Montagespritzen eingebracht ist. Somit ist die Klappe, bestehend aus einer Klappenwelle 12, Klappenflügeln 13 und einem Klappenrand 14, einteilig ausgeführt. Der Klappenrand 14, dessen Trennung zu den Klappenflügeln 13 durch eine gestrichelte Linie dargestellt ist, wird in einem zweiten Verfahrensschritt nach der Abkühlung der Klappe an die Klappenflügel 13 angespritzt.

Der Rahmen 10 weist Dichtungsnuten 15 auf, die bei Einbau der Klappe in einen nicht dargestellten Rohrabschnitt mit nicht dargestellten Dichtungen eine Abdichtung zwischen Innenraum und Umgebung gewährleisten. Weiterhin weist der Rahmen einen Befestigungsflansch 17 auf. Dieser kann zur Befestigung der Klappe zwischen den Rohrabschnitten verwendet werden. Löcher 16 im Befestigungsflansch 17 können zur Aufnahme von Schrauben dienen.

Die Klappenwelle 12 ist in Durchgängen 18 im Klappenrahmen gelagert. Die Kontur der Durchgänge sind durch eine gestrichelte Linie im Klappenrahmen angedeutet und entsprechend der Kontur der Klappenwelle 12 in den Lagerbereichen, wenn man vom Lagerspiel absieht. Die Durchgänge weisen einen zylindrischen Bereich 19 und einen konischen Bereich 20 auf.

In Figur 2 sind Klappe 11 sowie Rahmen 10 im Schnitt dargestellt. Es wird deutlich, daß der Rahmen 10 auf beiden Seiten eine Dichtungsnut 15 aufweist. Die Schaltklappe 11 wird in leicht schräger Stellung im Rahmen montagegespritzt. Dadurch wird erreicht, daß der Klappenrand 14 in dem Rahmen 10 einen Anschlag findet. Dadurch kann die Dichtheit der Klappe erhöht und ein Verklemmen der Klappe im geschlossenen Zustand verhindert werden. Die Klappenwelle 12 und die Klappenflügel 13 sind durch Rippen 21 zusätzlich stabilisiert.

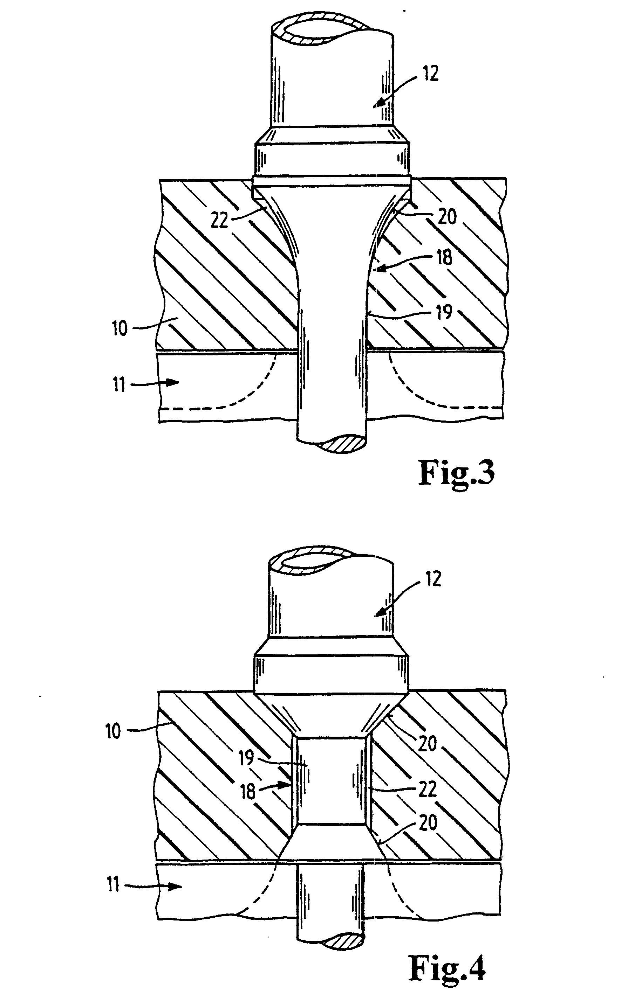

In Figur 3 ist eine Version des Durchganges 18 dargestellt, in dem der Übergang vom zylindrischen Bereich 19 zum konischen Bereich 20 stufenlos erfolgt. Figur 3 zeigt die Klappenwelle 12 im Durchgang 18 bei hohen Temperaturen des Betriebsbereiches. Wobei das sich im konischen Bereich 20 ergebende Spiel 22 zwischen Klappenwelle 12 und Durchgang 18 übertrieben dargestellt ist.

Figur 4 zeigt die Ausgestaltung der Klappenwelle 12 mit zwei konischen Bereichen 20 in einem Durchgang 18 im Rahmen 10. Zwischen den konischen Bereichen ist ein zylindrischen Bereich 19 angeordnet. Die Klappe ist für tiefere Temperaturen des Betriebsbereiches mit übertriebenem Spiel 22 im zylindrischen Bereich 19 dargestellt.

## Patentansprüche

1. Klappenmechanismus, insbesondere montagegespritzte Schaltklappe, umfassend einen Rahmen (10) und eine Klappe (11), bestehend aus einer Klappenwelle (12) und Klappenflügeln (13), wobei die Klappenwelle in Durchgänge (18), die der Rahmen (10) aufweist, gelagert ist, und die Klappe (11) eine Durchgangsöffnung im Rahmen (10) durch Drehung der Klappe um die Klappenwelle zumindest weitgehend verschließbar ist, wobei Mittel zum Ausgleich der Schwindung der Klappe (11) aufgrund des Fertigungsprozesses und/oder aufgrund von Temperatur- und Feuchtigkeitsschwankungen in dem Klappenmechanismus vorgesehen sind, **dadurch gekennzeichnet, daß** die Klappenwelle (12) und der Durchgang (18) mindestens einen konischen Bereich (20) aufweisen, wobei es einen Temperaturbereich gibt, in dem im konischen Bereich kein Spiel zwischen Klappenwelle (12) und Durchgang (18) vorhanden ist.

2. Klappenmechanismus nach Anspruch 1, **dadurch gekennzeichnet, daß** die Klappenwelle (12) und der Durchgang (18) mindestens einen zylindrischen Bereich (19) aufweisen, wobei es einen Temperaturbereich gibt, in dem im zylindrischen Bereich kein Spiel zwischen Klappenwelle (12) und Durchgang (18) vorhanden ist.

3. Klappenmechanismus nach einem der Ansprüche 1 oder 2, **dadurch gekennzeichnet, daß** mindestens an einem der Enden der Klappenwelle (12) und der dazugehörigen Durchgang (18) zwei konische Bereiche mit entgegengesetzten Neigungswinkeln angebracht sind.

4. Klappenmechanismus nach einem der Ansprüche 2 oder 3, **dadurch gekennzeichnet, daß** mindestens ein konischer Bereich (20) kantenlos in den benachbarten zylindrischen Bereich (19) übergeht.

5. Klappenmechanismus nach einem der vorherigen Ansprüche, **dadurch gekennzeichnet, daß** die Klappe (11) aus zwei im Rahmen (10) montagegespritzten Komponenten besteht wobei die erste Komponente einen Klappenkörper (12,13) und die zweite Komponente einen Klappenrand (14) bildet und wobei der Klappenrand (14) auf den durch die fertigungsbedingte Schwindung geschrumpften Klappenkörper aufgebracht ist.

6. Klappenmechanismus nach einem der vorherigen Ansprüche, **dadurch gekennzeichnet, daß** der Klappenkörper (12, 13) aus Kunststoff und der Klappenrand (14) aus einem elastischen Material, insbesondere TPE, besteht.

## Claims

1. Flap mechanism, more especially injection-moulded control flap, including a housing (10) and a flap (11), comprising a flap shaft (12) and flap wings (13), the flap shaft being mounted in passages (18), which are provided in the housing (10), and the flap (11) being able to close at least substantially a through-aperture in the housing (10) by rotating the flap on the flap shaft, means being provided for compensating the shrinkage of the flap (11) on account of the production process and/or on account of changes in temperature or humidity in the flap mechanism, **characterised in that** the flap shaft (12) and the passage (18) have at least one conical region (20), there being a temperature range in which there is no play between flap shaft (12) and passage (18) in the conical region.

2. Flap mechanism according to claim 1, **characterised in that** the flap shaft (12) and the passage (18) have at least one cylindrical region (19), there being a temperature range in which there is no play between flap shaft (12) and passage (18) in the cylindrical region.

3. Flap mechanism according to one of the claims 1 or 2, **characterised in that** two conical regions with opposing angles of inclination are integrally formed on at least one of the ends of the flap shaft (12) and the associated passage (18).

4. Flap mechanism according to one of the claims 2 or 3, **characterised in that** at least one conical region (20) runs into the adjacent cylindrical region (19) in a seamless manner.

5. Flap mechanism according to one of the preceding claims, **characterised in that** the flap (11) is made up of two components which are injection-moulded in the housing (10), the first component forming a flap body (12, 13) and the second component forming a flap edge (14), and the flap edge (14) being applied to the flap body, which has been shrunk through the shrinkage occurring in the production process.

6. Flap mechanism according to one of the preceding claims, **characterised in that** the flap body (12, 13) is made of plastics material and the flap edge (14) is made of a resilient material, more especially TPE.

## Revendications

1. Mécanisme à clapet, notamment clapet de commutation injecté au montage, comprenant un cadre (10) et un clapet (11), composé d'un arbre de clapet (12) monté dans des passages (18) du cadre (10) et d'ailes de clapet (13), ce clapet (11) pouvant obturer, par rotation autour de son arbre, au moins largement une ouverture de passage dans le cadre (10), des moyens étant prévus pour compenser le retrait du clapet (11) résultant du procédé de fabrication et/ou produit par des variations de température et d'humidité dans le mécanisme à clapet,
**caractérisé en ce que**
l'arbre de clapet (12) et le passage (18) présentent au moins une zone conique (20), ce qui donne une plage de température dans laquelle il n'existe aucun jeu dans la zone conique entre l'arbre de clapet (12) et le passage (18).

2. Mécanisme à clapet selon la revendication 1,
**caractérisé en ce que**
l'arbre de clapet (12) et le passage (18) présentent au moins une zone cylindrique (19), ce qui donne une plage de température dans laquelle il n'existe aucun jeu dans la zone cylindrique entre l'arbre de clapet (12) et le passage (18).

3. Mécanisme à clapet selon la revendication 1 ou 2,
**caractérisé en ce qu'**
au moins à une des extrémités de l'arbre de clapet (12) et du passage (18) correspondant, se trouvent deux zones coniques ayant des angles de pente opposés.

4. Mécanisme à clapet selon la revendication 2 ou 3,
**caractérisé en ce qu'**
au moins une zone conique (20) se poursuit sans bord de transition dans la zone (19) cylindrique voisine.

5. Mécanisme à clapet selon l'une des revendications précédentes,
**caractérisé en ce que**
le clapet (11) est constitué de deux composants injectés montés dans le cadre (10), le premier composant étant un corps de clapet (12, 13) tandis que le second composant forme un bord de clapet (14) rapporté sur le corps de clapet qui s'est contracté sous l'effet du retrait produit par la fabrication.

6. Mécanisme à clapet selon l'une des revendications précédentes,
**caractérisé en ce que**
le corps de clapet (12, 13) est en matière plastique et le bord du clapet (14) est fait d'un matériau élastique, en particulier de tétrapolyéthylène TPE.
